# EUROPEAN PATENT SPECIFICATION

(11) **EP 2 629 566 B1**
(45) Date of publication and mention of the grant of the patent: **15.08.2018**
(21) Application number: 11854797.5
(22) Date of filing: 24.10.2011
(51) Int. Cl.: H04W 36/00, H04W 24/10, H04L 5/00

(54) **SYSTEM, METHOD AND APPARATUS FOR REPORTING MEASUREMENT CAPABILITY**
SYSTEM, VERFAHREN UND VORRICHTUNG ZUR MELDUNG VON MESSKAPAZITÄTEN
SYSTÈME, PROCÉDÉ ET APPAREIL PERMETTANT DE RAPPORTER UNE CAPACITÉ DE MESURE

(30) Priority: 06.01.2011 CN 201110002328
(43) Date of publication of application: 21.08.2013
(73) Proprietor: ZTE Corporation, Shenzhen, Guangdong 518057 (CN)
(72) Inventor: CHEN, Zhongming, Shenzhen Guangdong 518057 (CN); DU, Zhongda, Shenzhen Guangdong 518057 (CN)
(74) Representative: Wilson Gunn
(86) International application number: PCT/CN2011/081176
(87) International publication number: WO 2012/092792

(56) References cited:
- WO-A1-2012/064780
- CN-A- 101 043 708
- HUAWEI: "Consideration on UE RF capability in CA", 3GPP DRAFT; R4-102608, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Bratislava; 20100628, 1 July 2010 (2010-07-01), XP050454813, [retrieved on 2010-07-01]
- "3rd Generation Partnership Project; Technical Specification Group Radio Access Network; Evolved Universal Terrestrial Radio Access (E-UTRA); Radio Resource Control (RRC); Protocol specification (Release 10)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 19 December 2010 (2010-12-19) , pages 1-276, XP050462133, [retrieved on 2010-12-19]
- QUALCOMM INCORPORATED: "Indication of need for measurement gaps in carrier aggregation", 3GPP DRAFT; R2-106284, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492204, [retrieved on 2010-11-09]
- SAMSUNG: "Consideration on UE capability in CA scenario", 3GPP DRAFT; R4-101840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Montreal, Canada; 20100510, 20 May 2010 (2010-05-20), XP050426822, [retrieved on 2010-05-20]
- ZTE: "Measurement gap configuration considering diverse RF structure", 3GPP DRAFT; R2-110239-MEASUREMENT GAP CONFIGURATION CONSIDERING DIVERSE RF STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050474669, [retrieved on 2011-01-11]

## Description

### TECHNICAL FIELD

The disclosure relates to the technical filed of digital mobile communications, and in particular to a method for reporting measurement capability and a User Equipment (UE).

### BACKGROUND

In cellular mobile communication systems, cell reselection and handover are important functions thereof. To realize cell reselection smoothly, UE needs to measure the quality of signal of different cells, so as to select a proper cell to reside. After the UE establishes connection with the network in a certain cell, the UE still needs to measure the quality of signal of cells adjacent to the cell, so as to select a proper cell for handover, to meet the requirement of mobility.

The specific process that the UE performs measurement under the connected state includes: a network side sends a measurement control message to the UE, wherein the measurement control message includes a Measurement Identity (MID), a Measurement Object (MO), Report Configuration (RC) and other related properties of measurement. The UE performs measurement according to the measurement object and reports configuration in the measurement control message, and generates a measurement report according to the measurement result to report to the network side. Generally, each measurement task includes an MID, an MO property (for example, a carrier (a center frequency point of the carrier, i.e., Absolute Radio Frequency Channel Number (ARFCN)), a neighbor list or the like) and RC property (for example, an event triggered report or a regular report, with the trigger event being defined by trigger conditions (A1, A2...), and the threshold, offset and Time To Trigger (TTT) related to the trigger conditions, or the like). Due to different carrier frequency in which the measurement object stays, the measurement task includes same-frequency measurement and different-frequency measurement, that is, the measurement task is same-frequency measurement if the carrier frequency of the measurement object and that of the serving cell (the carrier frequency of the serving cell refers to the centre frequency point at which the UE communicates with the serving cell) are the same, and the measurement task is different-frequency measurement if the carrier frequency of the measurement object and that of the serving cell are different, different-frequency measurement refers to the measurement task in which the measurement object is not E-UTRAN, for example, a measurement task in which the measurement object is a Universal Mobile Telecommunication System (UMTS), a Code Division Multiple Access (CDMA2000), and a GSM EDGE Radio Access Network (GERAN). For measurement in a same-frequency measurement task, the UE can directly execute measurement without a measurement gap; for measurement in a different-frequency and different-system measurement task, the UE needs to require the network side to configure a measurement gap, that is, to designate a period of time, within the period, the UE temporarily interrupts communication with the serving cell and executes the different-frequency and different-system measurement. If it is necessary to configure a measurement gap, the base station configures the measurement gap for the UE via an RRC reconfiguration message.

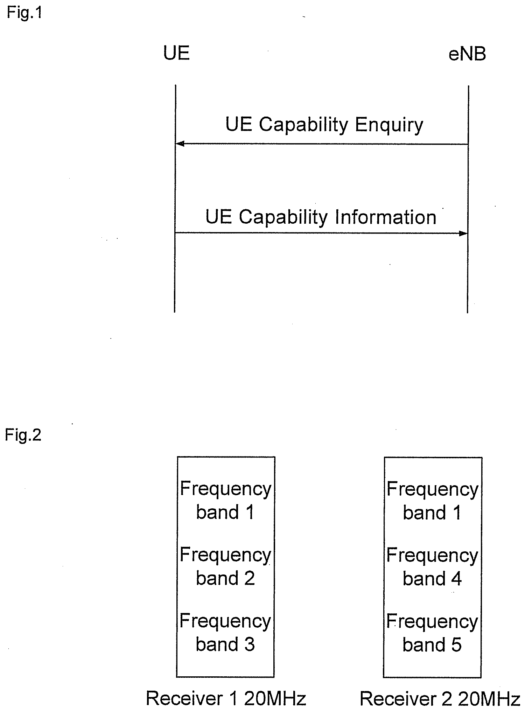

In LTE, the UE communicates with the base station via a single cell when it is in the connected state, when the UE performs measurement in the different-frequency and different-system measurement task, the base station determines to configure the measurement gap for the UE according to the capability reported by the UE, the UE performs different-frequency and different-system measurement within the time specified by the measurement gap, and the base station will not schedule the UE. Fig. 1 is a flow chart of a UE reporting the measurement capability in the related technologies, as shown in Fig. 1, the base station requests the UE to report the measurement capability of the UE via a UE capability inquiry message, the UE reports the measurement capability of the UE to the base station via a UE capability information message containing the capability of whether a measurement gap is required for the UE to execute different-frequency and different-system measurement task, specifically: when the UE is at a certain frequency in frequency band x, it is measured whether a measurement gap is required for the UE in the frequency on the frequency band y, wherein y may be equal to x, at this time, it is indicated that whether a measurement gap is required for the UE to measure the different frequency on the frequency band x when the UE is at a certain frequency on the frequency band x. Frequency band refers to the number of a certain uplink and downlink frequency band, for example, as mentioned in Table 5.5-1 in 36.101 (Evolved Universal Terrestrial Radio Access (E-UTRAN); UE radio transmission and reception), frequency band 1 represents a frequency band from uplink 1920MHz to 1980MHz and from downlink 2110MHz to 2170MHz in FDD.

In order to provide higher data rate for mobile users, Long Term Evolution Advance (LTE-A) proposes Carrier Aggregation (CA) technology, the purpose is to provide greater broadband for UEs with the corresponding capability and to improve the peek rate of UEs. In LTE, the maximum downlink transmission bandwidth supported by the system is 20MHz, while carrier aggregation is to aggregate two or more Component Carriers (CC) to support transmission bandwidth greater than 20MHz but not greater than 100MHz. Carrier aggregation may include continuous carrier aggregation and discontinuous carrier aggregation according to whether CCs are continuous in the frequency domain, therefore, in carrier aggregation, the UE can communicate with the base station via a plurality of cells simultaneously after entering the connected state, when the UE performs measurement in the different-frequency and different-system measurement task, the base station determines to configure a measurement gap for the UE, the UE performs different-frequency and different-system measurement within the time specified by the measurement gap, and the base station will not schedule the UE.

The currently defined intra-system measurement events supported by LTE-A are:
Event A1: the quality of signal of the primary or secondary serving cell is higher than a specified threshold.
Event A2: the quality of signal of the primary or secondary serving cell is lower than a specified threshold.
Event A3: the quality of signal of the neighbor cell is higher than the quality of signal of the primary serving cell by one specified offset.
Event A4: the quality of signal of the neighbor cell is higher than the specified threshold.
Event A5: the quality of signal of the primary serving cell is lower than a specified threshold 1, and the quality of signal of the neighbor cell is higher than a specified threshold 2.
Event A6: the quality of signal of the neighbor cell is higher than the quality of signal of the secondary serving cell by one specified offset.

The currently defined inter-system measurement events supported by LTE-A are:
Event B1: the quality of signal of the neighbor cell is higher than the specified threshold.
Event B2: the quality of signal of the primary serving cell is lower than the specified threshold 1, and the quality of signal of the neighbor cell is higher than the specified threshold 2.

The 3GPP RAN WG4 contribution R4-10268 entitled "Consideration on UE RF capability in CA" discloses that a User Equipment, UE, should inform an evolved NodeB, eNB, about its UE capability including supported band list, maximum bandwidth for continuous aggregation within each supported band and band combinations in which bands can be supported simultaneously. The 3GPP Technical Specification, TS, 36.331, v10.0.0, entitled "3rd Generation Partnership Project; Technical Specification Group Radio Access Network; Evolved Universal Terrestrial Radio Access (E-UTRA); Radio Resource Control (RRC); Protocol specification (Release 10)" discloses that the UE reports measurement information in accordance with the measurement configuration as provided by EUTRAN, wherein the measurement configuration includes measurement objects, reporting configurations and measurement gaps. The 3GPP RAN WG2 contribution, R2-106284, entitled "Indication of need for measurement gaps in carrier aggregation" discloses an approach to allocating measurement gaps in CA is the general principle that gaps are needed whenever the measured band shares a receiver with any serving band, even if other receivers could handle the measurement. The 3GPP RAN WG4 contribution, R4-101840, entitled "Consideration on UE capability in CA scenario" discloses that UE capability includes number of RF chain capability, frequency band supported within each RF chain, and number of supported CC for continuous caπier aggregation within each band in each RF chain. WO 2012/064780A1 discloses a method for signaling a capability to operate in one or more carrier aggregation configurations and measurement gap requirements corresponding to the carrier aggregation configurations.

In order to support carrier aggregation, the radio frequency structure of the UE should meet the corresponding requirements. In LTE-A, there are two types of UE receivers, one type is a single receiver, which supports bandwidth greater than 20MHz and supports continuous carrier aggregation within same frequency band only. The other type is a plurality of receivers, each of which supports bandwidth less than or equal to 20MHz and supports continuous carrier aggregation within same frequency band and discontinuous carrier aggregation in different frequency band. Since the structure of the UE receiver is implemented internally, according to the current common sense, the algorithm of the base station needs to shield these internal structures, therefore, in some cases, the base station is unable to determine whether a measurement gap is required for the UE to execute different-frequency and different-system measurement. Fig. 2 is a construction diagram of a UE in one embodiment, as shown in Fig. 2, the UE has two independent receivers, which respectively support bandwidth of 20M, receiver 1 supports operating in frequency band 1/2/3, receiver 2 supports operating in frequency band 1/4/5, if the base station only configures one CC in frequency band 1 to the UE, the UE can enable receiver 1 or receiver 2 to enter the operating state, further, if receiver 1 is used, a measurement gap is required for the UE to execute different-frequency measurement in frequency band 2/3, but a measurement gap is not required for the UE to execute different-frequency measurement in frequency band 4/5. However, in carrier aggregation, the UE is able to communicate with the source base station via a plurality of cells simultaneously after entering the connected state, therefore, if the UE still reports in a same manner as that in LTE, since the UE is unable to predict which CCs the base station will configure to the UE for aggregation, in order to consider the overall situation and avoid the problem that the base station does not configure a measurement gap when the measurement gap is required, the UE will largely require a measurement gap for all frequency bands to execute measurement, thereby resulting in that the base station configures a measurement gap when the measurement gap is not required by the UE, according to the definition of the measurement gap, the base station will not schedule the UE within the time specified by the measurement gap, while the base station can absolutely schedule the UE within the period of time, as a result, unnecessary measurement gap will undoubtedly cause great resource waste.

### SUMMARY

The invention is defined in the independent claims. The embodiments and/or examples of the following description which are not covered by the appended claims are considered as not being part of the present invention.

The main purpose of the disclosure is to provide a method for reporting measurement capability and a system thereof, the measurement capability of the UE can be reported accurately, and the base station configure a measurement gap for the UE according to this capability, so that possible resource waste caused can be avoided when the UE is scheduled to execute measurement in the carrier aggregation scenario.

To achieve the above purpose, the technical solutions of the disclosure are implemented as follows:
a method for reporting measurement capability, including: a UE reports the measurement capability of the UE to a base station, wherein the measurement capability is the capability of whether a measurement gap is required for the UE to execute different-frequency and different-system measurement when the UE operates in one frequency band or in a carrier aggregation scenario;
after the base station receives the measurement capability of the UE, the method may further include: the base station determines whether to configure the measurement gap for the UE according to the frequency band to which carriers configured to be aggregated for the UE belong, the frequency band to which the carrier frequency for a measurement object of a currently configured measurement task belongs, and the measurement capability of the UE.

Before the UE reports the measurement capability of the UE to the base station, the method may further include: the UE receives a capability inquiry message from the base station.

The method may further include: the UE reports a carrier aggregation capability of the UE while reporting the measurement capability of the UE to the base station.

When a maximum number of n carriers aggregation is supported, the carrier aggregation scenario includes a scenario in which n carriers are aggregated.

When a maximum number of n carriers aggregation is supported, the carrier aggregation scenario may further include a scenario in which one carrier, and/or two carriers, and/or three carriers ...and/or n-1 carriers are aggregated.

The UE measurement capability reported by the UE is the same as an index supporting the carrier aggregation capability.

A system comprises a UE and a base station, wherein
the UE is configured to report a measurement capability of the UE to a base station, wherein the measurement capability is the capability of whether a measurement gap is required for the UE to execute different-frequency and different-system measurement when the UE operates in one frequency band or in a carrier aggregation scenario;
the base station is configured to receive a carrier aggregation capability of the UE while receiving the measurement capability of the UE, and determine whether to configure the measurement gap for the UE according to the frequency band to which carriers configured to be aggregated for the UE belong, the frequency band to which the carrier frequency for a measurement object of a currently configured measurement task belongs, and the measurement capability of the UE after receiving the measurement capability of the UE.

The step that the UE reports the measurement capability of the UE to the base station is: the UE reports according to a UE capability inquiry message sent by the base station.

A method for reporting measurement capability, comprising: receiving, by a base station, the measurement capability of a UE, wherein the measurement capability is the capability of whether a measurement gap is required for the UE to execute different-frequency and different-system measurement when the UE operates in one frequency band and in a carrier aggregation scenario; and
after the base station receives the measurement capability of the UE, determining, by the base station, whether to configure the measurement gap for the UE according to the frequency band to which carriers configured to be aggregated for the UE belong, the frequency band to which the carrier frequency for a measurement object of a currently configured measurement task belongs, and the measurement capability of the UE.

Before the base station receives the measurement capability of the UE, the base station sends a UE capability inquiry message to the UE.

When a maximum number of n carriers aggregation is supported, the carrier aggregation scenario includes a scenario in which n carriers are aggregated.

When a maximum number of n carriers aggregation is supported, the carrier aggregation scenario may further include a scenario in which one carrier, and/or two carriers, and/or three carriers ...and/or n-1 carriers are aggregated.

The UE measurement capability received by the base station is the same as an index supporting the carrier aggregation capability.

A base station is configured to receive a measurement capability of a UE, wherein the measurement capability is the capability of whether a measurement gap is required for the UE to execute different-frequency and different-system measurement when the UE operates in one frequency band and in a carrier aggregation scenario;
the base station is further configured to receive the measurement capability of the UE, and determine whether to configure the measurement gap for the UE according to the frequency band to which carriers configured to be aggregated for the UE belong, the frequency band to which the carrier frequency for a measurement object of a currently configured measurement task belongs, and the measurement capability of the UE after receiving the measurement capability of the UE.

According to the method for reporting measurement capability and the UE thereof in the embodiments of the disclosure, the UE reports the measurement capability of the UE to the base station, wherein the measurement capability is the capability of whether a measurement gap is required for the UE to execute different-frequency and different-system measurement when the UE operates in one frequency band or in a carrier aggregation scenario, and after acquiring the measurement capability of the UE, the base station determines whether to configure a measurement gap for the UE according to the frequency band to which carriers configured to be aggregated for the UE belong, the frequency band to which the carrier frequency for a measurement object of a currently configured measurement task belongs, and the measurement capability of the UE. The disclosure extends the UE capability report and contains contents of measurement capability in the carrier aggregation, whether a measurement gap is required to measure each frequency band at this time is reported specifically based on the carrier aggregation scenario, the base station can configure a measurement gap for the UE according to this capability, so the base station may not configure a measurement gap for the UE if unnecessary, so that the influence of the different-frequency and different-system measurement to the service can be reduced, and possible resource waste caused can be avoided when the UE carries out measurement in the carrier aggregation scenario.

### BRIEF DESCRIPTION OF THE DRAWINGS

Fig. 1 is a flow chart of a UE reporting measurement capability in the related technologies;
Fig. 2 illustrates a construction diagram of a UE in one embodiment;
Fig. 3 illustrates a flow chart of a method for reporting measurement capability in the embodiments of the disclosure;
Fig. 4 illustrates a flow chart of UE reporting measurement capability and base station executing measurement configuration in embodiment 1 of the disclosure;
Fig. 5 illustrates a construction diagram of the UE in embodiment 2 of the disclosure;
Fig. 6 illustrates a construction diagram of the UE in embodiment 3 of the disclosure.

### DETAILED DESCRIPTION

The basic concept of the disclosure is that: the UE reports the measurement capability of the UE to the base station, wherein the measurement capability is the capability of whether a measurement gap is required for the UE to execute different-frequency and different-system measurement when the UE operates in one frequency band or in a carrier aggregation scenario. After acquiring the measurement capability of the UE, the base station determines whether to configure a measurement gap for the UE according to the frequency band to which carriers configured to be aggregated for the UE belong, the frequency band to which the carrier frequency for a measurement object of a currently configured measurement task belongs, and the measurement capability of the UE.

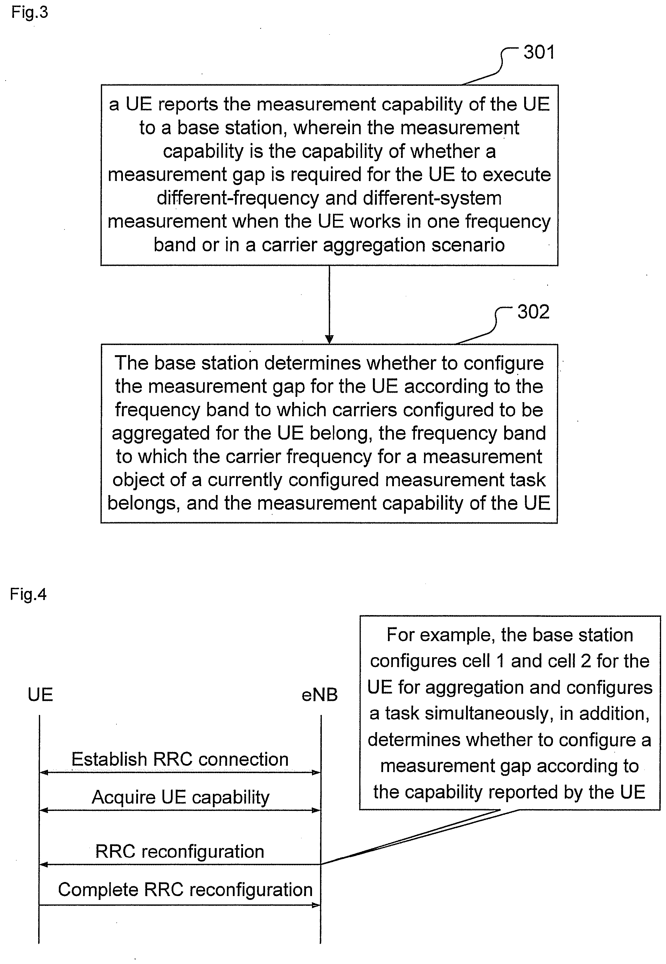

Fig. 3 illustrates a flow chart of a method for reporting measurement capability in the embodiments of the disclosure, as shown in Fig. 3, the method includes:
Step 301: a UE reports the measurement capability of the UE to a base station, wherein the measurement capability is the capability of whether a measurement gap is required for the UE to execute different-frequency and different-system measurement when the UE operates in one frequency band or in a carrier aggregation scenario.

Here, the UE generally reports the measurement capability of the UE to the base station according to the UE capability inquiry message sent by the base station, of course, the UE can also report the carrier aggregation capability of the UE at the same time.

It should be noted that, in a scenario that the UE has a single receiver, at this time, it supports continuous carrier aggregation, that is, the UE can only operate within one frequency band, so the UE reports the capability of whether a measurement gap is required for the UE to execute each different-frequency and different-system measurement when the UE operates in a certain frequency band (a frequency band supported by the UE). In the disclosure, the different-frequency includes the different-frequency in a same frequency band with the operating frequency band, and the different-frequency in different frequency band with the operating frequency band.

In a scenario that the UE has a plurality of receivers, when the UE supports aggregation of n carriers, the carrier aggregation scenario includes a scenario in which one carrier, two carriers, three carriers ... n-1 carriers and n carriers are aggregated, at this time, the UE can report the capability of whether a measurement gap is required for the UE to execute each different-frequency and different-system measurement when the UE operates in a certain frequency band or carriers on a plurality of frequency bands are aggregated only in a scenario in which n carriers are aggregated, the UE can also further report the capability of whether a measurement gap is required for the UE to execute each different-frequency and different-system measurement when the UE operates in a certain frequency band or carriers on a plurality of frequency bands are aggregated in scenarios in which one carrier, and/or two carriers, and/or three carriers ... and/or n-1 carriers are aggregated.

It should be noted that, if the UE has an additional measurement capability, that is, if the UE has an independent measurement module, it reports the measurement capability in combination with the additional measurement capability (i.e., the capability of the measurement module), for example, if the measurement module supports measurement in frequency bands 1 to 7, no measurement gap is required to execute measurement in frequency bands 1 to 7, if it only supports measurement in frequency band 1/3/4/5, the UE reports that no measurement gap is required to execute measurement in frequency band 1/3/4/5, and a measurement gap is required to execute measurement in frequency band 2/6/7.

Step 302: After acquiring the measurement capability of the UE, the base station determines whether to configure a measurement gap for the UE according to the frequency band to which carriers configured to be aggregated for the UE belong, the frequency band to which the carrier frequency for a measurement object of a currently configured measurement task belongs, and the measurement capability of the UE.

The disclosure further provides a UE correspondingly, which is configured to report the measurement capability of the UE to a base station, wherein the measurement capability is the capability of whether a measurement gap is required for the UE to execute different-frequency and different-system measurement when the UE operates in one frequency band or in a carrier aggregation scenario.

The step that the UE reports the measurement capability of the UE to the base station is: the UE reports according to a UE capability inquiry message sent by the base station.

The UE is also configured to report the carrier aggregation capability of the UE while reporting the measurement capability of the UE to the base station.

When the UE has an additional measurement capability, then the step that the UE reports the measurement capability of the UE to the base station is: reporting in combination with the additional measurement capability.

The implementation of the technical solutions will be further described in details below with reference to drawings and specific embodiments.

### Embodiment 1

In embodiment 1 of the present disclosure, a flow chart of UE reporting measurement capability and base station executing measurement configuration is as illustrated in Fig. 4. In the embodiment, after cell 1, whose center frequency point in the E-UTRAN system is in F1, completes RRC establishment process, the UE is in the connected state, F1 belongs to frequency band 1, the UE has two impendent receivers, which respectively support bandwidth of 20M, the construction of the UE is as shown in Fig. 2, receiver 1 supports operating in frequency band 1/2/3, receiver 2 supports operating in frequency band 1/4/5, the following embodiments are based on the UE shown in Fig. 2. Here, UE uses receiver 1 to process data communication in cell 1 by default.

The base station requests the UE to report the capability information, and the UE reports the following carrier aggregation capability information according to the capability of the UE: it supports aggregation of two carriers at most, wherein the first frequency band and the second frequency band are not in any particular order, and only for describing the fact of supporting carrier aggregation in frequencies in the first frequency band and the second frequency band, the carrier aggregation capability reported by the UE in embodiment 1 may be as shown in Table 1.1:

**Table 1.1**

| No. | the first frequency band | the second frequency band |
|---|---|---|
| 1 | 1 | 1 |
| 2 | 1 | 4 |
| 3 | 1 | 5 |
| 4 | 2 | 1 |
| 5 | 2 | 4 |
| 6 | 2 | 5 |
| 7 | 3 | 1 |
| 8 | 3 | 4 |
| 9 | 3 | 5 |

The UE simultaneously reports the capability information whether a measurement gap is required to execute different-frequency and different-system measurement, including two parts, first, the capability information of the UE in a scenario that the UE operates in a single frequency band is as shown in Table 1.2:

**Table 1.2**

| Operating frequency band | Whether a measurement gap is required to execute different-frequency (for example, frequency band x) measurement | Whether a measurement gap is required to execute different-system measurement |
|---|---|---|
| 1 | X=1, not required | X=1, not required |
| | X=2, required | X=2, required |
| | X=3, required | X=3, required |
| | X=4, not required | X=4, not required |
| | X=5, not required | X=5, not required |
| 2 | X=1, not required | X=1, not required |
| | X=2, required | X=2, required |
| | X=3, required | X=3, required |
| | X=4, not required | X=4, not required |
| | X=5, not required | X=5, not required |
| 3 | X=1, not required | X=1, not required |
| | X=2, required | X=2, required |
| | X=3, required | X=3, required |
| | X=4, not required | X=4, not required |
| | X=5, not required | X=5, not required |
| 4 | X=1, not required | X=1, not required |
| | X=2, not required | X=2, not required |
| | X=3, not required | X=3, not required |
| | X=4, required | X=4, required |
| | X=5, required | X=5, required |
| 5 | X=1, not required | X=1, not required |
| | X=2, not required | X=2, not required |
| | X=3, not required | X=3, not required |
| | X=4, required | X=4, required |
| | X=5, required | X=5, required |

Since both receiver 1 and receiver 2 support operating in frequency band 1, therefore, if the UE operates only in frequency band 1, the UE uses receiver 1 for processing by default (the UE may evaluate which receiver for processing consumes less power according to internal implementation, if use of receiver 2 consumes less power, it uses receiver 2 for processing by default, it is the same hereinafter), as shown in the first row of Table 1.2, the UE operates in frequency band 1 currently, no measurement gap is required to execute measurement in frequency band 1/4/5 since receiver 2 can execute different-frequency measurement in frequency band 1/4/5, a measurement gap is required to execute measurement in frequency band 2/3 since receiver 2 does not support frequency band 2/3.

Second, the capability information of the UE in a scenario that the UE operates in double frequency bands is as shown in Table 1.3, wherein, the serial numbers in Table 1.3 correspond to those in Table 1.1, the UE should report whether a measurement gap is required to execute different-frequency different-system measurement in frequency bands 1 to 5 for each combination (i.e., each number), the serial numbers in Table 1.3 may not be reported and are directly substituted by combinations of two carriers to be aggregated in Table 1.1, for example, the serial number 4 is substituted by (2, 1), indicating that frequencies in frequency band 2 and frequencies in frequency band 1 can be carrier aggregated:

**Table 1.3**

| No. | Whether a measurement gap is required to execute different-frequency measurement | Whether a measurement gap is required to execute different-system measurement |
|---|---|---|
| 1 | X=1, required | X=1, required |
| 2 | X=2, required | X=2, required |
| 3 | X=3, required | X=3, required |
| 4 | X=4, required | X=4, required |
| 5 | X=5, required | X=5, required |
| 6 | | |
| 7 | | |
| 8 | | |
| 9 | | |

The base station configures the following measurement task for the UE via an RRC reconfiguration message according to the actual requirement, wherein F2 belongs to frequency band 1:
MID=1, MO=F1, RC=A3
MID=2, MO=F2, RC=A3

Meanwhile, according to the capability of the UE (Table 1.2), the base station determines that no measurement gap is required for the UE to execute different-frequency (F2) measurement in frequency band 1 when the UE operates in frequency band 1 (F1), therefore it does not configure a measurement gap for the UE, and after receiving the configuration of the measurement task, the UE performs the measurement in the measurement task.

Subsequently, according to service requirement and the capability of the UE (i.e. supporting frequency band 1 and aggregation of different-frequency cells in frequency band 1), the base station configures cell 2, whose center frequency point is in F2, to be aggregated via an RRC reconfiguration message.

In addition, according to the actual requirement, the base station further configures the following measurement task for the UE via an RRC reconfiguration message, wherein F3 belongs to frequency band 4:
MID=3, MO=F3, RC=A3

Meanwhile, according to the capability of the UE (Table 1.3), the base station determines that a measurement gap is required for the UE to measure different-frequency (F3) in frequency band 4 when the UE aggregates at frequency band 1 (F1) and frequency band 1 (F2), therefore, the base station further needs to configure a measurement gap for the UE via an RRC reconfiguration message (the RRC reconfiguration message may be the same RRC reconfiguration message in which MID=3 is configured above), and after receiving the configuration of the measurement task and measurement gap, the UE performs the measurement of the measurement task MID=3 within the time specified by the measurement gap.

Subsequently, according to the actual requirement, the base station further configures the following measurement task for the UE via an RRC reconfiguration message, wherein F4 belongs to frequency band 5:
MID=4, MO=F4, RC=B2

Meanwhile, according to the capability of the UE (Table 1.2), the base station determines that a measurement gap is required to measure different-frequency (F4) in frequency band 5 when the UE aggregates at frequency band 1 (F1) and frequency band 1 (F2), but the base station has already configured a measurement gap for the UE, therefore, at this time, the base station does not need to configure a measurement gap again, and after receiving the measurement task, the UE performs the measurement of the measurement task MID=4 within the time specified by the measurement gap.

### Embodiment 2

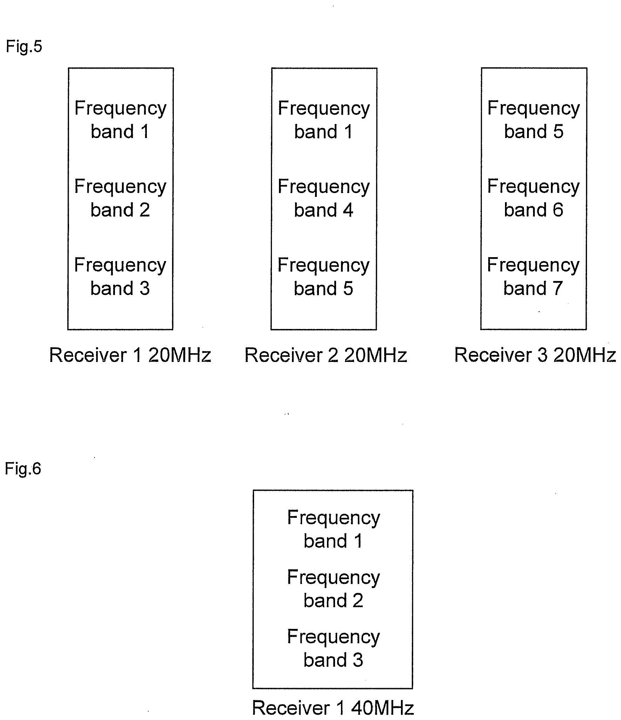

After cell 1, whose center frequency point in the E-UTRAN system is in F1, completes RRC establishment process, the UE is in the connected state, F1 belongs to frequency band 1, Fig. 5 illustrates a construction diagram of the UE in embodiment 2 of the disclosure, as shown in Fig. 4, the UE has three separate receivers, which respectively support bandwidth of 20M, the UE uses receiver 1 to process data communication of cell 1 by default.

The base station requests the UE to report the capability information, and the UE reports the following carrier aggregation capability information according to the capability of the UE: it supports aggregation of three carriers at most, wherein the first frequency band, the second frequency band and the third frequency band are not in any particular order, just for describing the fact of supporting carrier aggregation in frequencies in the first frequency band, the second frequency band and the third frequency band, the three-carrier aggregation capability reported by the UE in embodiment 2 may be as shown in Table 2.1:

**Table 2.1**

| No. | The first frequency band | the second frequency band | the third frequency band |
|---|---|---|---|
| 1 | 1 | 1 | 5 |
| 2 | 1 | 1 | 6 |
| 3 | 1 | 1 | 7 |
| 4 | 1 | 4 | 5 |
| 5 | 1 | 4 | 6 |
| 6 | 1 | 4 | 7 |
| 7 | 1 | 5 | 5 |
| 8 | 1 | 5 | 6 |
| 9 | 1 | 5 | 7 |
| 10 | 2 | 1 | 5 |
| 11 | 2 | 1 | 6 |
| 12 | 2 | 1 | 7 |
| 13 | 2 | 4 | 5 |
| 14 | 2 | 4 | 6 |
| 15 | 2 | 4 | 7 |
| 16 | 2 | 5 | 5 |
| 17 | 2 | 5 | 6 |
| 18 | 2 | 5 | 7 |
| 19 | 3 | 1 | 5 |
| 20 | 3 | 1 | 6 |
| 21 | 3 | 1 | 7 |
| 22 | 3 | 4 | 5 |
| 23 | 3 | 4 | 6 |
| 24 | 3 | 4 | 7 |
| 25 | 3 | 5 | 5 |
| 26 | 3 | 5 | 6 |
| 27 | 3 | 5 | 7 |

Meanwhile, the UE reports the capability information of whether a measurement gap is required to execute different-frequency and different-system measurement, since it supports aggregation of three carriers at most, the capability information includes three parts, i.e., capability information when the UE operates in a single carrier, in a scenario in which two carriers are aggregated and in a scenario in which three carriers are aggregated, wherein the capability information of the UE in a scenario that the UE operates in a single frequency band (the UE uses receiver 2 for processing by default when the UE operates in the single frequency band 5) may be as shown in Table 2.2:

**Table 2.2**

| Operating frequency band | Whether a measurement gap is required to execute different-frequency (for example, frequency band x) measurement | Whether a measurement gap is required to execute different-system measurement |
|---|---|---|
| 1 | X=1, not required | X=1, not required |
| 2 | X=2, required | X=2, required |
| 3 | X=3, required | X=3, required |
| | X=4, not required | X=4, not required |
| | X=5, not required | X=5, not required |
| | X=6, not required | X=6, not required |
| | X=7, not required | X=7, not required |
| 4 | X=1, not required | X=1, not required |
| 5 | X=2, not required | X=2, not required |
| | X=3, not required | X=3, not required |
| | X=4, required | X=4, required |
| | X=5, not required | X=5, not required |
| | X=6, not required | X=6, not required |
| | X=7, not required | X=7, not required |
| 6 | X=1, not required | X=1, not required |
| 7 | X=2, not required | X=2, not required |
| | X=3, not required | X=3, not required |
| | X=4, not required | X=4, not required |
| | X=5, not required | X=5, not required |
| | X=6, required | X=6, required |
| | X=7, required | X=7, required |

Second, the capability information of the UE in a scenario that the UE operates in a scenario in which two carriers are aggregated is: the capability information in Table 2.1 is based on a scenario that the UE operates in a scenario in which three carriers are aggregated, the base station is able to know carriers of which two frequency bands can be aggregated from Table 2.1, therefore, the UE does not have to report combinations of two carriers to be aggregated when it reports the carrier aggregation capability, however, the UE needs to reorganize the carriers when it reports the measurement capability, the capability information of the UE when the UE operates in double frequency bands in embodiment 2 may be as shown in Table 2.3:

**Table 2.3**

| The first frequency band | The second frequency band | Whether a measurement gap is required to execute different-frequency measurement | Whether a measurement gap is required to execute different-system measurement |
|---|---|---|---|
| 1 | 1 | X=1, required | X=1, required |
| 1 | 4 | X=2, required | X=2, required |
| 1 | 5 | X=3, required | X=3, required |
| 2 | 1 | X=4, required | X=4, required |
| 2 | 4 | X=5, not required | X=5, not required |
| 2 | 5 | X=6, not required | X=6, not required |
| 3 | 1 | X=7, not required | X=7, not required |
| 3 | 4 | | |
| 3 | 5 | | |
| 2 | 6 | X=1, not required | X=1, not required |
| 2 | 7 | X=2, required | X=2, required |
| 3 | 6 | X=3, required | X=3, required |
| 3 | 7 | X=4, not required | X=4, not required |
| 1 | 6 | X=5, not required | X=5, not required |
| 1 | 7 | X=6, required | X=6, required |
| | | X=7, required | X=7, required |
| 4 | 5 | X=1, not required | X=1, not required |
| 4 | 6 | X=2, not required | X=2, not required |
| 4 | 7 | X=3, not required | X=3, not required |
| 5 | 5 | X=4, required | X=4, required |
| 5 | 6 | X=5, required | X=5, required |
| 5 | 7 | X=6, required | X=6, required |
| | | X=7, required | X=7, required |

Finally, the capability information of the UE when the UE operates in a scenario that three carriers are aggregated is as shown in Table 2.4:

**Table 2.4**

| No. | Whether a measurement gap is required to execute different-frequency measurement | Whether a measurement gap is required to execute different-system measurement |
|---|---|---|
| 1 | X=1, required | X=1, required |
| 2 | X=2, required | X=2, required |
| 3 | X=3, required | X=3, required |
| 4 | X=4, required | X=4, required |
| 5 | X=5, required | X=5, required |
| 6 | X=6, required | X=6, required |
| 7 | X=7, required | X=7, required |
| 8 | | |
| 9 | | |
| 10-27 | | |

Serial numbers in Table 2.4 correspond to those in Table 2.1, the UE needs to report whether a measurement gap is required to execute different-frequency measurement in frequency bands 1 to 7 for each combination, i.e., each number. It should be noted that, if the UE has an additional measurement capability, that is, if the UE has a separate measurement module, it reports according to the additional measurement capability and the capability of the measurement module, that is, if the measurement module supports measurement in frequency bands 1 to 7, no measurement gap is required to execute measurement in frequency bands 1 to 7, if it only supports measurement in frequency band 1/3/4/5, the UE reports that no measurement gap is required to execute measurement in frequency band 1/3/4/5, and a measurement gap is required to execute measurement in frequency band 2/6/7.

Scenario 1: two carriers are aggregated. According to the service requirement and the capability of UE, i.e., the capability of supporting frequency band 1 and aggregation of different-frequency cells in frequency band 1, the base station configures a center frequency point to be aggregated in cell 2 in F2 via an RRC reconfiguration message, wherein F2 belongs to frequency band 1. Meanwhile, the base station configures the following measurement task for the UE via the RRC reconfiguration message:
MID=1, MO=F1, RC=A3
MID=2, MO=F2, RC=A3
MID=3, MO=F5, RC=A3
MID=4, MO=F6, RC=B2

Wherein, F5 belongs to frequency band 5, and F6 belongs to frequency band 6.

According to the capability of the UE (shown in Table 2.3), the base station determines that no measurement gap is required for the UE to execute different-frequency (F5) measurement in frequency band 5 when the UE operates in a scenario that frequency band 1 (F1) and frequency band 1 (F2) are in aggregation, and no measurement gap is required for the UE to execute different-system (F6) measurement in frequency band 6, therefore it does not configure a measurement gap for the UE, and after receiving the configuration of the measurement task, the UE performs the measurement in the measurement task.

Subsequently, according to the requirement, the base station further configures the following measurement task for the UE via an RRC reconfiguration message, wherein F3 belongs to frequency band 3, and F4 belongs to frequency band 4:
MID=5, MO=F3, RC=A3
MID=6, MO=F4, RC=B2

According to the capability of the UE (shown in Table 2.3), the base station determines that a measurement gap is required for the UE to execute different-frequency (F3) measurement in frequency band 3 when the UE aggregates at frequency band 1 (F1) and frequency band 1 (F2), and a measurement gap is required for the UE to execute different-system (F4) measurement in frequency band 4, therefore, the base station further needs to configure a measurement gap for the UE via an RRC reconfiguration message (the RRC reconfiguration message may be the same RRC reconfiguration message in which MID=5/6 is configured above), and after receiving the configuration of the measurement task and measurement gap, the UE performs the measurement in the measurement task MID=5/6 within the time specified by the measurement gap.

Scenario 2: three carriers are aggregated. According to the service requirement and the capability of UE (shown in Table 2.1), i.e., the capability of supporting aggregation in frequency band 1 and different-frequency cells in frequency band 1 and frequency band 5, the base station configures a center frequency point to be aggregated in cell 3 in F5 via an RRC reconfiguration message, wherein F5 belongs to frequency band 5. Meanwhile, the base station does not add new measurement task configuration, therefore, according to the capability of the UE (show in Table 2.4), the base station determines that a measurement gap is required for the UE to execute different-frequency (F3) measurement in frequency band 3 when the aggregation is performed in frequency band 1 (F1), frequency band 1 (F2) and frequency band 5, and a measurement gap is also required for the UE to execute different-system (F4/6) measurement in frequency band 4/6, therefore, the base station keeps its original measurement gap configuration, and after receiving the configuration of the measurement task, the UE performs the measurement of the measurement task MID=4/5/6 within the time specified by the measurement gap.

In the embodiment, the UE may also only report the capability of whether a measurement gap is required to execute different-frequency and different-system measurement when the UE operates in a scenario that three carriers are aggregated, for the capability of whether a measurement gap is required to execute different-frequency and different-system measurement when the UE operates in a single carrier and in a scenario in which two carriers are aggregated, it can be derived from the carrier aggregation capability (as shown in Table 2.1) reported by the UE, as the 10th to the 18th combinations shown in Table 2.1, it is indicated that, if the UE operates in frequency band 1 only, no measurement gap is required to execute measurement in frequency band 1/4/5/6/7, the 4/5/6th combination indicates that, if the UE performs aggregation in frequency band 1 and frequency band 4, no measurement gap is required to execute measurement in frequency band 5/6/7.

### Embodiment 3

After cell 1, whose center frequency point in the E-UTRAN system is in F1, completes RRC establishment process, the UE is in the connected state, F1 belongs to frequency band 1, Fig. 6 illustrates a construction diagram of the UE in embodiment 3 of the disclosure, as shown in Fig. 5, the UE has one separate receiver, which supports bandwidth of 40M.

The base station requests the UE to report the capability information, and the UE reports the following carrier aggregation capability information according to the capability of the UE: it supports aggregation of one carrier at most, and supports the maximum bandwidth of 40MHz, the carrier aggregation information reported by the UE may be as shown in Table 3.1:

**Table 3.1**

| No. | Supported frequency band |
|---|---|
| 1 | 1 |
| 2 | 2 |
| 3 | 3 |

Meanwhile, the UE further reports the capability information whether a measurement gap is required to execute different-frequency and different-system measurement, which may be as shown in Table 3.2:

**Table 3.2**

| Operating frequency band | Whether a measurement gap is required to execute different-frequency (for example, frequency band x) measurement | Whether a measurement gap is required to execute different-system measurement |
|---|---|---|
| 1 | X=1, required | X=1, required |
| 2 | X=2, required | X=2, required |
| 3 | X=3, required | X=3, required |

The base station configures the following measurement task for the UE via an RRC reconfiguration message according to the actual requirement, wherein F2 belongs to frequency band 1:
MID=1, MO=F1, RC=A3
MID=2, MO=F2, RC=A3

Meanwhile, according to the capability of the UE (Table 3.2), i.e., the capability that a measurement gap is required for the UE to execute different-frequency (F2) measurement in frequency band 1 when the UE operates in frequency band 1 (F1), therefore the base station further needs to configure a measurement gap for the UE via an RRC reconfiguration message (the RRC reconfiguration message may be the same RRC reconfiguration message in which MID=1/2 is configured above), and after receiving the configuration of the measurement task and measurement gap, the UE performs the measurement of the measurement task MID=2 within the time specified by the measurement gap.

Subsequently, according to the service requirement and the capability of the UE (Table 3.1), i.e., the capability of supporting continuous carrier aggregation of different-frequency cells in frequency band 1, the base station configures cell 2, whose center frequency point is in F2, to be aggregated via an RRC reconfiguration message, and F1 and F2 are continuous.

In addition, according to the requirement, the base station further configures the following measurement task for the UE via an RRC reconfiguration message, wherein F3 belongs to frequency band 3:
MID=5, MO=F3, RC=A3

Meanwhile, according to the capability of the UE (Table 3.2), i.e., the capability that a measurement gap is required to execute different-frequency (F3) measurement in frequency band 3 when the aggregation is performed in frequency band 1 (F1) and frequency band 1 (F2) (since F1 and F2 are continuous, the UE operates in frequency band 1 at this time), since the base station has already configured a measurement gap for the UE, the base station does not need to configure a measurement gap again, and after receiving the measurement task, the UE performs the measurement of the measurement task MID=3 within the time specified by the measurement gap.

The above specific implementation ways are only preferred embodiments provided for convenient understanding of the disclosure, and shall not be interpreted as limiting the disclosure. All technical solutions covered by the claims of the disclosure should be included within the protection scope of the disclosure.

### INDUSTRIAL APPLICABILITY

The embodiments of the disclosure extend the UE capability report, and contain contents of measurement capability in the carrier aggregation, it is reported whether a measurement gap is required to measure each frequency band at this time specifically based on the carrier aggregation scenario, the base station can configure a measurement gap for the UE according to this capability, so the base station may not configure a measurement gap for the UE when it is unnecessary, so that the influence of the different-frequency and different-system measurement to the service can be reduced, and possible resource waste caused can be avoided when the UE carries out measurement in the carrier aggregation scenario.

## Claims

1. A method for reporting measurement capability, comprising:
reporting (301), by a User Equipment, UE, the measurement capability of the UE to a base station, wherein the measurement capability is the capability of whether a measurement gap is required for the UE to execute different-frequency and different-system measurement when the UE operates in one frequency band and in a carrier aggregation scenario; and
**characterized in that**, after the base station receives the measurement capability of the UE, determining (302), by the base station, whether to configure the measurement gap for the UE according to the frequency band to which carriers configured to be aggregated for the UE belong, the frequency band to which the carrier frequency for a measurement object of a currently configured measurement task belongs, and the measurement capability of the UE.

2. The method according to claim 1, further comprising: before the UE reports the measurement capability of the UE, receiving, by the UE, a UE capability inquiry message from the base station.

3. The method according to claim 1, further comprising: reporting, by the UE, a carrier aggregation capability of the UE while reporting the measurement capability of the UE to the base station.

4. The method according to claim 1 to 3, wherein when a maximum number of n carriers aggregation is supported, the carrier aggregation scenario comprises a scenario in which n carriers are aggregated.

5. The method according to claim 4, wherein when a maximum number of n carriers aggregation is supported, the carrier aggregation scenario further comprises a scenario in which one carrier, and/or two carriers, and/or three carriers...and/or n-1 carriers are aggregated.

6. The method according to claim 4 or 5, wherein the UE measurement capability reported by the UE is the same as an index supporting the carrier aggregation capability.

7. A system, comprising a User Equipment, UE, and a base station, wherein the UE is configured to report a measurement capability of the UE to a base station, wherein the measurement capability is the capability of whether a measurement gap is required for the UE to execute different-frequency and different-system measurement when the UE operates in one frequency band and in a carrier aggregation scenario; and
**characterized in that**, the base station is configured to receive the measurement capability of the UE, and determine whether to configure the measurement gap for the UE according to the frequency band to which carriers configured to be aggregated for the UE belong, the frequency band to which the carrier frequency for a measurement object of a currently configured measurement task belongs, and the measurement capability of the UE after receiving the measurement capability of the UE.

8. The system according to claim 7 wherein the UE reporting the measurement capability of the UE to the base station is: the UE reports according to a UE capability inquiry message sent by the base station.

9. A method for reporting measurement capability, comprising:
receiving, by a base station, the measurement capability of a User Equipment, UE, wherein the measurement capability is the capability of whether a measurement gap is required for the UE to execute different-frequency and different-system measurement when the UE operates in one frequency band and in a carrier aggregation scenario; and
**characterized in that**, after the base station receives the measurement capability of the UE, determining (302), by the base station, whether to configure the measurement gap for the UE according to the frequency band to which carriers configured to be aggregated for the UE belong, the frequency band to which the carrier frequency for a measurement object of a currently configured measurement task belongs, and the measurement capability of the UE.

10. The method according to claim 9, further comprising: before the base station receives the measurement capability of the UE, sending, by the base station, a UE capability inquiry message to the UE.

11. The method according to claims 9 or 10, wherein when a maximum number of n carriers aggregation is supported, the carrier aggregation scenario comprises a scenario in which n carriers are aggregated.

12. The method according to claim 11, wherein when a maximum number of n carriers aggregation is supported, the carrier aggregation scenario further comprises a scenario in which one carrier, and/or two carriers, and/or three carriers...and/or n-1 carriers are aggregated.

13. The method according to claim 11 or 12, wherein the UE measurement capability received by the base station is the same as an index supporting the carrier aggregation capability.

14. A base station configured to receive a measurement capability of a User Equipment, UE, wherein the measurement capability is the capability of whether a measurement gap is required for the UE to execute different-frequency and different-system measurement when the UE operates in one frequency band and in a carrier aggregation scenario;
**characterized in that**, the base station is further configured to receive the measurement capability of the UE, and determine whether to configure the measurement gap for the UE according to the frequency band to which carriers configured to be aggregated for the UE belong, the frequency band to which the carrier frequency for a measurement object of a currently configured measurement task belongs, and the measurement capability of the UE after receiving the measurement capability of the UE.

## Patentansprüche

1. Verfahren zum Berichten einer Messfähigkeit, wobei das Verfahren umfasst:
Berichten (301) der Messfähigkeit des Teilnehmergeräts, UE, an eine Basisstation durch ein Teilnehmergerät, UE, wobei die Messfähigkeit die Fähigkeit ist, ob für das UE zum Ausführen einer Messung mit einer Anderen-Frequenz und mit einem Anderen-System eine Messlücke erforderlich ist, wenn das UE in einem Frequenzband und in einem Trägeraggregationsszenario arbeitet; und
**dadurch gekennzeichnet, dass** durch die Basisstation bestimmt wird (302), ob die Messlücke für das UE in Übereinstimmung mit dem Frequenzband, zu dem Träger gehören, die dafür konfiguriert sind, für das UE aggregiert zu werden, das Frequenzband, zu dem die Trägerfrequenz für ein Messobjekt einer gegenwärtig konfigurierten Messaufgabe gehört, und die Messfähigkeit des UE konfiguriert werden soll, nachdem die Basisstation die Messfähigkeit des UE empfangen hat.

2. Verfahren nach Anspruch 1, das ferner umfasst: Empfangen einer UE-Fähigkeits-Anfragenachricht von der Basisstation durch das UE, bevor das UE die Messfähigkeit des UE berichtet.

3. Verfahren nach Anspruch 1, das ferner umfasst: Berichten einer Trägeraggregationsfähigkeit des UE, während die Messfähigkeit des UE an die Basisstation berichtet wird, durch das UE.

4. Verfahren nach Anspruch 1 bis 3, wobei das Trägeraggregationsszenario ein Szenario umfasst, in dem n Träger aggregiert werden, wenn die Aggregation einer maximalen Anzahl von n Trägern unterstützt wird.

5. Verfahren nach Anspruch 4, wobei das Trägeraggregationsszenario ferner ein Szenario umfasst, in dem ein Träger und/oder zwei Träger und/oder drei Träger ... und/oder n-1 Träger aggregiert werden, wenn die Aggregation einer maximalen Anzahl von n Trägern unterstützt wird.

6. Verfahren nach Anspruch 4 oder 5, wobei die durch das UE berichtete UE-Messfähigkeit dieselbe ist wie ein Index, der die Trägeraggregationsfähigkeit unterstützt.

7. System, das ein Teilnehmergerät, UE, und eine Basisstation umfasst, wobei:
das UE dafür konfiguriert ist, eine Messfähigkeit des UE an eine Basisstation zu berichten, wobei die Messfähigkeit die Fähigkeit ist, ob für das UE zum Ausführen einer Messung mit einer Anderen-Frequenz und mit einem Anderen-System eine Messlücke erforderlich ist, wenn das UE in einem Frequenzband und in einem Trägeraggregationsszenario arbeitet; und
**dadurch gekennzeichnet, dass** die Basisstation dafür konfiguriert ist, die Messfähigkeit des UE zu empfangen und zu bestimmen, ob die Messlücke für das UE in Übereinstimmung mit dem Frequenzband, zu dem Träger gehören, die dafür konfiguriert sind, für das UE aggregiert zu werden, das Frequenzband, zu dem die Trägerfrequenz für ein Messobjekt einer gegenwärtig konfigurierten Messaufgabe gehört, und die Messfähigkeit des UE konfiguriert werden soll, nachdem sie die Messfähigkeit des UE empfangen hat.

8. System nach Anspruch 7, wobei, dass das UE die Messfähigkeit des UE an die Basisstation berichtet, ist: dass das UE gemäß einer durch die Basisstation gesendeten UE-Fähigkeits-Anfragenachricht berichtet.

9. Verfahren zum Berichten einer Messfähigkeit, wobei das Verfahren umfasst:
Empfangen der Messfähigkeit eines Teilnehmergeräts, UE, durch eine Basisstation, wobei die Messfähigkeit die Fähigkeit ist, ob für das UE zum Ausführen einer Messung mit einer Anderen-Frequenz und mit einem Anderen-System eine Messlücke erforderlich ist, wenn das UE in einem Frequenzband und in einem Trägeraggregationsszenario arbeitet; und
**dadurch gekennzeichnet, dass** durch die Basisstation bestimmt wird (302), ob die Messlücke für das UE in Übereinstimmung mit dem Frequenzband, zu dem Träger gehören, die dafür konfiguriert sind, für das UE aggregiert zu werden, das Frequenzband, zu dem die Trägerfrequenz für ein Messobjekt einer gegenwärtig konfigurierten Messaufgabe gehört, und die Messfähigkeit des UE konfiguriert werden soll, nachdem die Basisstation die Messfähigkeit des UE empfangen hat.

10. Verfahren nach Anspruch 9, das ferner umfasst: Senden einer UE-Fähigkeits-Anfragenachricht durch die Basisstation an das UE, bevor die Basisstation die Messfähigkeit des UE empfängt.

11. Verfahren nach Anspruch 9 oder 10, wobei das Trägeraggregationsszenario ein Szenario umfasst, in dem n Träger aggregiert werden, wenn die Aggregation einer maximalen Anzahl von n Trägern unterstützt wird.

12. Verfahren nach Anspruch 11, wobei das Trägeraggregationsszenario ferner ein Szenario umfasst, in dem ein Träger und/oder zwei Träger und/oder drei Träger ... und/oder n-1 Träger aggregiert werden, wenn die Aggregation einer maximalen Anzahl von n Trägern unterstützt wird.

13. Verfahren nach Anspruch 11 oder 12, wobei die durch die Basisstation empfangene UE-Messfähigkeit dieselbe ist wie ein Index, der die Trägeraggregationsfähigkeit unterstützt.

14. Basisstation, die dafür konfiguriert ist, eine Messfähigkeit eines Teilnehmergeräts, UE, zu empfangen, wobei die Messfähigkeit die Fähigkeit ist, ob für das UE zum Ausführen einer Messung mit einer Anderen-Frequenz und mit einem Anderen-System eine Messlücke erforderlich ist, wenn das UE in einem Frequenzband und in einem Trägeraggregationsszenario arbeitet;
**dadurch gekennzeichnet, dass** die Basisstation ferner dafür konfiguriert ist, die Messfähigkeit des UE zu empfangen und zu bestimmen, ob die Messlücke für das UE in Übereinstimmung mit dem Frequenzband, zu dem Träger gehören, die dafür konfiguriert sind, für das UE aggregiert zu werden, das Frequenzband, zu dem die Trägerfrequenz für ein Messobjekt einer gegenwärtig konfigurierten Messaufgabe gehört, und die Messfähigkeit des UE konfiguriert werden soll, nachdem sie die Messfähigkeit des UE empfangen hat.

## Revendications

1. Procédé de signalement d'une capacité de mesure, comprenant :
signaler (301) par un équipement d'utilisateur, UE, la capacité de mesure de l'UE a une station de base, la capacité de mesure étant la capacité de savoir si un intervalle de mesure est requis pour que l'UE exécute une mesure par fréquence différente et par système différent, lorsque l'UE fonctionne dans une seule bande de fréquence et dans un scénario d'agrégation de porteuses et
**caractérisé en ce que**, après que la station de base a reçu la capacité de mesure de l'UE, déterminer (302), par la station de base, s'il faut configurer l'intervalle de mesure pour le UE suivant la bande de fréquence à laquelle des porteuses, configurées pour être agrégées pour l'UE, appartiennent, la bande de fréquence à laquelle la fréquence de porteuse, pour un objet de mesure d'une tâche de mesure configurée couramment, appartient et la capacité de mesure de l'UE.

2. Procédé suivant la revendication 1, comprenant, en outre : avant que l'UE signale la capacité de mesure de l'UE, recevoir par l'UE un message de demande de capacité de l'UE de la part de la station de base.

3. Procédé suivant la revendication 1, comprenant, en outre : signaler par l'UE une capacité d'agrégation de porteuse de l'UE, tout en signalant la capacité de mesure de l'UE à la station de base.

4. Procédé suivant la revendication 1 à 3, dans lequel, lorsqu'un nombre maximum d'agrégation de n porteuses est supporté, le scénario d'agrégation de porteuses comprend un scénario dans lequel n porteuses sont agrégées.

5. Procédé suivant la revendication 4, dans lequel, lorsqu'un nombre maximum d'agrégation de n porteuses est supporté, le scénario d'agrégation de porteuse comprend, en outre, un scénario dans lequel une seule porteuse et/ou deux porteuses et/ou trois porteuses... et/ou n-1 porteuses sont agrégées.

6. Procédé suivant la revendication 4 ou 5, dans lequel la capacité de mesure de l'UE, signalée par l'UE, est la même qu'un indice supportant la capacité d'agrégation de porteuses.

7. Système, comprenant un équipement d'utilisateur, UE, et une station de base, dans lequel
l'UE est configuré pour signaler une capacité de mesure de l'UE à une station de base, la capacité de mesure étant la capacité de savoir si un intervalle de mesure est requis pour que l'UE exécute une mesure par fréquence différente et par système différent, lorsque l'UE fonctionne dans une seule bande de fréquence et dans un scénario d'agrégation de porteuses et
**caractérisé en ce que** la station de base est configurée pour recevoir la capacité de mesure de l'UE et déterminer s'il faut configurer l'intervalle de mesure de l'UE suivant la bande de fréquence à laquelle des porteuses, configurées pour être agrégées pour l'UE, appartiennent, la bande de fréquence à laquelle la fréquence des porteuses, pour un objet de mesure d'une tâche de mesure configurée couramment, appartient et la capacité de mesure de l'UE après avoir reçu la capacité de mesure de l'UE.

8. Système suivant la revendication 7, dans lequel le signalement de l'UE de la capacité de mesure de l'UE à la station de base est : l'UE signale suivant un message de demande de capacité de l'UE envoyé par la station de base.

9. Procédé de signalement d'une capacité de mesure, comprenant :
recevoir par une station de base la capacité de mesure d'un équipement d'utilisateur UE, la capacité de mesure étant la capacité de savoir si un intervalle de mesure est requis pour que l'UE exécute une mesure par fréquence différente et par système différent, lorsque l'UE fonctionne dans une seule bande de fréquence et dans un scénario d'agrégation de porteuses et
**caractérisé en ce que**, après que la station de base a reçu la capacité de mesure de l'UE, déterminer (302), par la station de base, s'il faut configurer l'intervalle de mesure pour le UE suivant la bande de fréquence à laquelle des porteuses, configurées pour être agrégées pour l'UE, appartiennent, la bande de fréquence à laquelle la fréquence de porteuse, pour un objet de mesure d'une tâche de mesure configurée couramment, appartient et la capacité de mesure de l'UE.

10. Procédé suivant la revendication 9, comprenant, en outre : avant que la station de base ait reçu la capacité de mesure de l'UE, envoyer par la station de base un message de demande de capacité de l'UE à l'UE.

11. Procédé suivant la revendication 9 ou 10, dans lequel, lorsqu'un nombre maximum d'une agrégation de n porteuses est supporté, le scénario d'agrégation de porteuse comprend un scénario dans lequel n porteuses sont agrégées.

12. Procédé suivant la revendication 11, dans lequel, lorsqu'un nombre maximum d'une agrégation de n porteuses est supporté, le scénario d'agrégation de porteuse comprend, en outre, un scénario dans lequel une seule porteuse et/ou deux porteuses et/ou trois porteuses... et/ou n-1 porteuses sont agrégées.

13. Procédé suivant la revendication 11 ou 12, dans lequel la capacité de mesure de l'UE reçue par la station de base est la même qu'un indice supportant la capacité d'agrégation de porteuse.

14. Station de base configurée pour recevoir une capacité de mesure d'un équipement d'utilisateur, UE,
dans laquelle la capacité de mesure est la capacité de savoir si un intervalle de mesure est requis pour que l'UE exécute une mesure par fréquence différente et par système différent, lorsque l'UE fonctionne dans une seule bande de fréquence et dans un scénario d'agrégation de porteuses et **caractérisée en ce que** la station de base est configurée, en outre, pour recevoir la capacité de mesure de l'UE et déterminer s'il faut configurer l'intervalle de mesure pour l'UE suivant la bande de fréquence à laquelle les porteuses, configurées pour être agrégées, appartiennent, la bande de fréquence à laquelle la fréquence de porteuse pour un objet de mesure d'une tâche de mesure configurée couramment, appartient et la capacité de mesure de l'UE après avoir reçu la capacité de mesure de l'UE.
